# EUROPEAN PATENT APPLICATION

(11) **EP 4 633 129 A1**
(43) Date of publication of application: **15.10.2025**
(21) Application number: 22968590.4
(22) Date of filing: 12.12.2022
(51) Int. Cl.: H04N 5/63, H04N 21/443

(54) **DISPLAY DEVICE AND POWER SUPPLY CONTROL METHOD THEREOF**

(71) Applicant: LG Electronics Inc., Yeongdeungpo-gu Seoul 07336 (KR)
(72) Inventor: SONG, Sungjin, Seoul 06772 (KR)
(74) Representative: Schott, Jakob Valentin
(86) International application number: PCT/KR2022/020133
(87) International publication number: WO 2024/128329

(57) **Abstract**

A display device of the present disclosure comprises: a battery; a driving module for driving the display device; a power supply unit that supplies power input from a plurality of power sources to at least one of the battery and the driving module; and a control unit that controls a power supply path of the power supply unit, wherein the control unit identifies a connection state with respect to the plurality of power sources, selects, on the basis of the connection state with respect to the plurality of power sources, a power source for supplying power to at least one of the battery and the driving module, and controls the power supply path so that power input from the selected power source is supplied to the at least one of the battery and the driving module.

## Description

### [Technical Field]

The present disclosure relates to a display device capable of controlling power supply for device driving and battery charging by applying a plurality of power sources, and a method for controlling power supply thereof.

### [Background Art]

In general, a display device is a device that has the function of receiving, processing, and displaying images that can be viewed by a user. A display device receives a broadcast signal selected by a user from among broadcast signals transmitted from a broadcasting station, separates an image signal from the received signal, and then displays the separated image signal on a display.

In recent years, due to the development of broadcasting technology and network technology, the functions of display devices have become considerably more diverse, and the performance of the devices has also improved accordingly. In other words, display devices have evolved to provide users with not only simply broadcasted content, but also various other content.

For example, the display device can provide not only programs received from broadcasting stations, but also game play, music appreciation, Internet shopping, and customized information using various applications. In order to perform these expanded functions, the display device is basically connected to other devices or networks using various communication protocols, and can provide a ubiquitous computing environment to the user. In other words, the display device has evolved into a smart device that enables connectivity to a network and ubiquitous computing.

Meanwhile, if a display device uses a single power source to operate the device and charge the battery, the battery charging time may be slow and the device operation may not be stable.

In other words, when driving a display device with only about 220V/110V using a single power source, in the case of a TV with a built-in battery, the adapter rating must be divided to drive the device and charge the battery, which may result in a slow battery charging time and restrictions on TV use, such as brightness restrictions.

In addition, in the case of built-in batteries, since charging must be performed within the rated power range, the temperature of the battery cells may remain high, which may cause problems with reliability such as lifespan, and a problem may arise in which the charging voltage/current must be adjusted downward to lower the temperature of the battery cells.

Therefore, in the future, it is necessary to develop a display device that can efficiently control power supply for device operation and battery charging by applying a plurality of power sources.

### [Disclosure]

### [Technical Problem]

An object of the present disclosure is to solve the above-described problems and other problems.

An object of the present disclosure provides a display device capable of efficiently controlling power supply for device operation and battery charging by controlling a power supply path so that power input from a power source is supplied to at least one of a battery and a driving module based on a connection state with a plurality of power sources, and a method for controlling power supply thereof.

### [Technical Solution]

According to an embodiment of the present disclosure, a display device includes a battery; a driving module driving a display device; a power supply part supplying power input from a plurality of power sources to at least one of the battery and the driving module; and, a control part controlling a power supply path of the power supply part, in which the control part may check a connection state with the plurality of power sources, select a power source for supplying power to at least one of the battery and the driving module based on the connection state with the plurality of power sources, and control the power supply path so that power input from the selected power source is supplied to at least one of the battery and the driving module.

According to an embodiment of the present disclosure, a method for controlling power supply of a display device including a battery and a driving module may include checking a connection state with a plurality of power sources, selecting a power source for supplying power to at least one of the battery and the driving module based on the connection state with the plurality of power sources; and controlling the power supply path so that power input from the selected power source is supplied to at least one of the battery and the driving module.

### [Advantageous Effect]

According to one embodiment of the present disclosure, a display device can efficiently control power supply for device operation and battery charging by controlling a power supply path so that power input from a power source is supplied to at least one of a battery and a driving module based on a connection state with a plurality of power sources.

In addition, the present disclosure can implement various operation scenarios of a display device, such as a TV, by configuring a plurality of power supply paths, including a power supply path for driving a display device and a power supply path for charging a battery, by utilizing a power source connection state logic circuit when powered from a plurality of power sources.

In addition, the present disclosure can control multiple power supply paths so that multiple powers do not collide and are efficiently supplied when power is supplied simultaneously from a plurality of power sources through a power source connection state logic circuit.

In addition, the present disclosure can shorten the charging time of the battery, extend the life of the battery cell, and improve reliability by charging the battery with an adapter, which is a main power source, and driving the TV operation with a USB PD, which is an external power source.

In addition, the present disclosure can reduce TV power consumption by blocking the power supply path to the battery when the battery is fully charged.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a block diagram illustrating a display device connected to a plurality of power sources according to one embodiment of the present disclosure.
Fig. 6 is a block diagram for explaining the operation of a display device according to one embodiment of the present disclosure.
Fig. 7 is a view for explaining a power source connection state logic circuit of a display device according to one embodiment of the present disclosure.
Fig. 8 is a view for explaining a logic table corresponding to a power source connection state logic circuit of a display device according to one embodiment of the present disclosure.
Fig. 9 is a view for explaining a process of controlling a power supply path of a display device according to one embodiment of the present disclosure.
Fig. 10 and Fig. 11 are flowcharts for explaining a method for controlling power supply of a display device according to an embodiment of the present disclosure.
Fig. 12 and Fig. 13 are views for explaining a power supply control process of a screen-on state of a display device according to one embodiment of the present disclosure.
Fig. 14 and Fig. 15 are views for explaining a power supply control process in a screen-off state of a display device according to one embodiment of the present disclosure.

### [Best Mode]

Hereinafter, embodiments disclosed in this specification is described with reference to the accompanying drawings, and the same or corresponding components are given with the same drawing number regardless of reference number, and their duplicated description will be omitted. The suffixes "module" and "part" for components used in the description below are assigned or mixed in consideration of easiness in writing the specification and do not have distinctive meanings or roles by themselves. Moreover, detailed descriptions related to well-known functions or configurations will be ruled out in order not to unnecessarily obscure subject matters of the present disclosure. However, this does not limit the present disclosure within specific embodiments and it should be understood that the present disclosure covers all the modifications, equivalents, and replacements within the idea and technical scope of the present disclosure.

It will be understood that although the ordinal numbers such as first and second are used herein to describe various elements, these elements should not be limited by these numbers. The terms are only used to distinguish one component from other components.

It will also be understood that when an element is referred to as being "'connected to" or "engaged with" another element, it can be directly connected to the other element, or intervening elements can also be present. It will also be understood that when an element is referred to as being 'directly connected to' another element, there is no intervening elements.

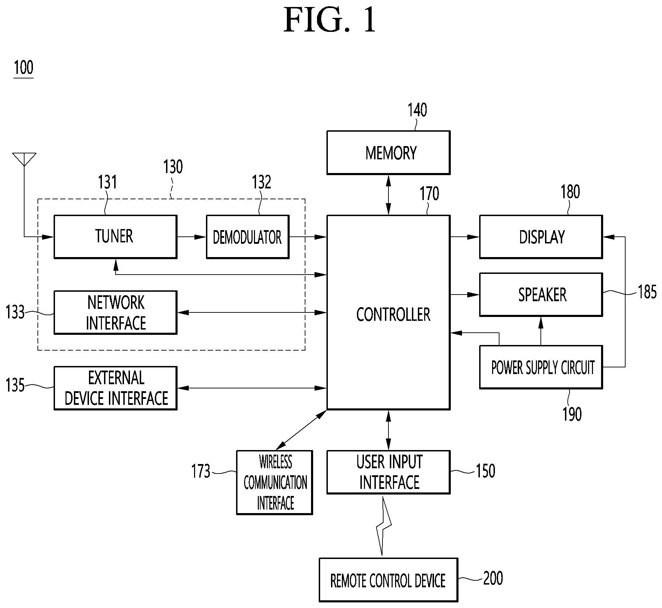

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a control part 170, a wireless communication interface unit 173, a display unit 180, an audio output unit 185, and a power supply part 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface unit 133 may access a predetermined webpage through an accessed network or another network linked to the accessed network. In other words, the network interface unit 133 may transmit or receive data to or from a corresponding server by accessing a predetermined webpage through the network.

The network interface unit 133 may receive content or data provided from a content provider or a network operator. In other words, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The external device interface unit 135 may receive an application or an application list in an adjacent external device and deliver the application or the application list to the control part 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Bluray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage unit 140 may store signal-processed image, voice, or data signals stored by a program in order for each signal processing and control in the control part 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control part 170, or may transmit signals from the control part 170 to a user. For example, the user input unit 150 may receive or process control signals such as power on/off, channel selection, and screen setting from the remote control device 200 or transmit control signals from the control part 170 to the remote control device 200 according to various communication methods such as Bluetooth, Ultra Wideband (WB), ZigBee, Radio Frequency (RF), and IR communication methods.

In addition, the user input unit 150 may transmit, to the control part 170, control signals input from local keys (not shown) such as a power key, a channel key, a volume key, and a setting key.

Image signals that are image-processed by the control part 170 may be input to the display unit 180 and displayed as images corresponding to the image signals. In addition, image signals that are image-processed by the control part 170 may be input to an external output device through the external device interface unit 135.

Voice signals processed by the control part 170 may be output to the audio output unit 185. In addition, voice signals processed by the control part 170 may be input to the external output device through the external device interface unit 135.

Additionally, the control part 170 may control overall operations of the display device 100.

In addition, the control part 170 may control the display device 100 by a user command or an internal program input through the user input unit 150, and may access the network to download a desired application or application list into the display device 100.

The control part 170 may output channel information selected by a user together with the processed image or voice signals through the display unit 180 or the audio output unit 185.

In addition, the control part 170 may output image signals or voice signals of an external device such as a camera or a camcorder, which are input through the external device interface unit 135, through the display unit 180 or the audio output unit 185, according to an external device image playback command received through the user input unit 150.

Moreover, the control part 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control part 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100. Furthermore, if the detected wearable device is a device authenticated to communicate with the display device 100, the control part 170 may transmit at least part of data processed in the display device 100 to the wearable device through the wireless communication unit 173. Therefore, a user of the wearable device may use the data processed by the display device 100 through the wearable device.

The voice acquisition unit 175 may obtain audio. The voice acquisition unit 175 may include at least one microphone (not shown) and may obtain audio around the display device 100 through the microphone (not shown).

The display unit 180 may convert image signals, data signals, or on-screen display (OSD) signals, which are processed in the control part 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

The audio output unit 185 receives the audio-processed signal from the control part 170 to output an audio signal.

The power supply part 190 supplies the corresponding power to the entire display device 100. Particularly, power may be supplied to the control part 170 that is capable of being implemented in the form of a system on chip (SOC), the display unit 180 for displaying an image, the audio output unit 185 for outputting audio, and the like.

Specifically, the power supply part 190 may include a converter that converts AC power to DC power and a DC/DC converter that converts a level of the DC power.

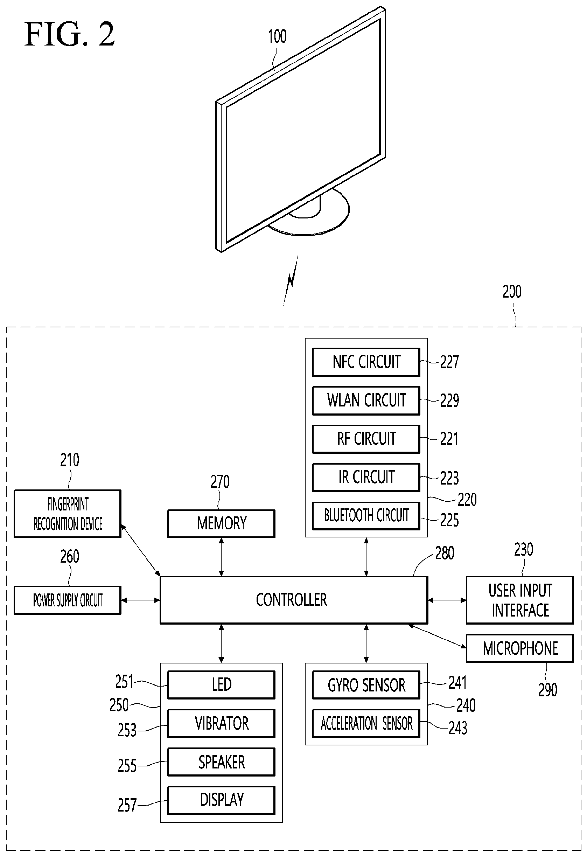

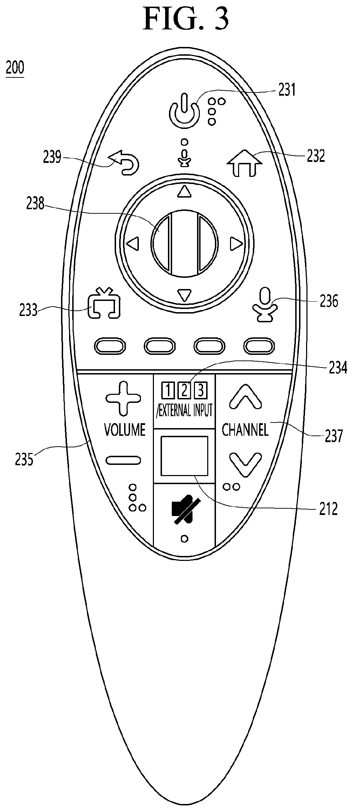

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply part 260, a storage unit 270, a control part 280, and a sound acquisition unit 290.

Referring to Fig. 2, the wireless communication unit 220 transmits/receives signals to/from an arbitrary any one of display devices according to the above-described embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply part 260 supplies power to the remote control device 200 and if the remote control device 200 does not move for a predetermined time, stops the power supply, so that power waste may be reduced. The power supply part 260 may resume the supply of power if a predetermined key provided at the remote control device 200 is operated.

The storage unit 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control part 280 of the remote control device 200 may store, in the storage unit 270, information on a frequency band for transmitting/receiving signals to/from the display device 100 paired with the remote control device 200 and refer to it.

The control part 280 controls general matters relating to the control of the remote control device 200. The control part 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may obtain voice.

The sound acquisition unit 290 may include at least one microphone and obtain voice through the microphone.

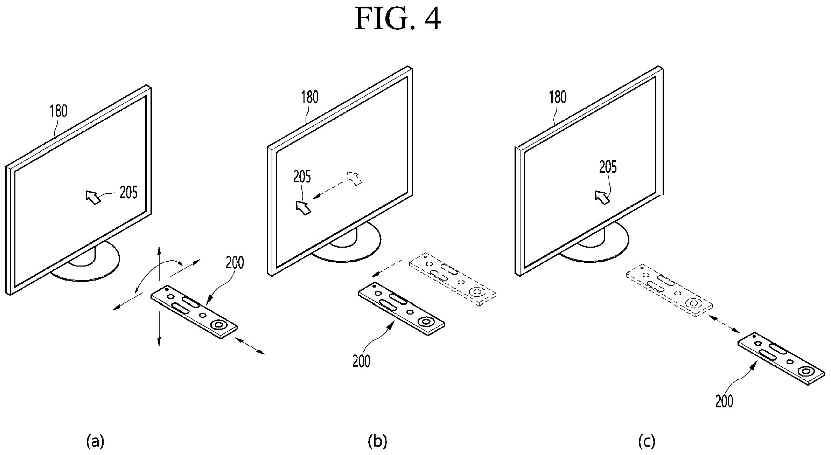

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as shown in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. In other words, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

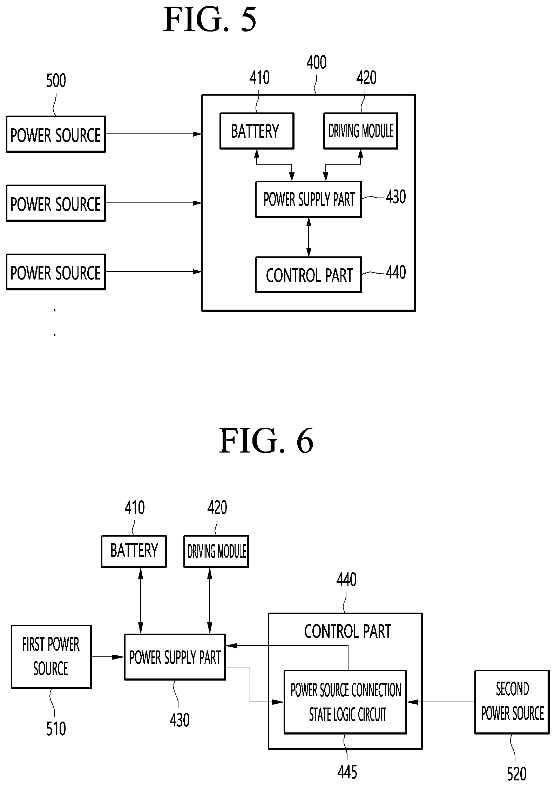

Fig. 5 is a block diagram illustrating a display device connected to a plurality of power sources according to one embodiment of the present disclosure.

As illustrated in Fig. 5, the present disclosure may include a battery 410, a driving module 420 for driving a display device 400, a power supply part 430 for supplying power input from a plurality of power sources 500 to at least one of the battery 410 and the driving module 420, and a control part 440 for controlling a power supply path of the power supply part 430.

Here, the plurality of power sources may include a first power source including a main power source and at least one second power source including an external power source.

For example, the main power source may include an adapter power source, and the external power source may include a Universal Serial Bus Power Delivery (USB PD) power source, but this is only an example and is not limited thereto.

In addition, the power supply part 430 may include a battery power supply part that provides a power supply path for supplying power input from a power source 500 selected in response to a control signal of the control part 440 to the battery 410, and a driving module power supply part that provides a power supply path for supplying power input from a power source 500 selected in response to a control signal of the control part 440 to the driving module 420.

For example, the battery power supply part may include a battery charging buck converter that switches power supplied to the battery 410 according to a control signal of the control part 440, and the driving module power supply part may include a boost converter that provides power of the battery input through the charging buck converter to the first driving module, a first buck converter that provides power of a second power source input through the charging buck converter to the second driving module, and a second buck converter that provides power input from the first power source to the third driving module, but this is only an example and is not limited thereto.

In addition, the power supply part 430 may include a first switch that switches the connection between the charging buck converter and the boost converter, a second switch that switches the connection between the charging buck converter and the first buck converter, and a third switch that switches the connection between the first power source and the second buck converter, but this is only an example and is not limited thereto.

Here, the power supply part 430 controls the first switch to connect the charging buck converter and the boost converter when the power supply mode is a battery mode that provides power from the battery to the first driving module, controls the second switch to connect the charging buck converter and the first buck converter when the power supply mode is an external power mode that provides power from the second power source to the second driving module, and controls the third switch to connect the first power source and the second buck converter when the power supply mode is a main power mode that provides power from the first power source to the third driving module.

For example, the first driving module may include a driving module including a high-level power supply (EVDD), the second driving module may include a driving module including a timing controller (TCON), and the third driving module may be a driving module including a main board circuit, but this is only an example and is not limited thereto.

Next, the control part 440 can check the connection state with a plurality of power sources 500, select a power source 500 to supply power to at least one of the battery 410 and the driving module 420 based on the connection state with the plurality of power sources 500, and control the power supply path so that power input from the selected power source 500 is supplied to at least one of the battery 410 and the driving module 420.

Here, when checking the connection state with a plurality of power sources 500, the control part 440 can recognize that it is connected to the corresponding power source 500 when power is input from the power source 500, and can recognize that it is not connected to the corresponding power source 500 when power is not input from the power source 500.

At this time, if the control part 440 recognizes that it is connected to the corresponding power source 500, it can generate a connection signal notifying the connection with the power source 500, and if it recognizes that it is not connected to the corresponding power source 500, it can generate a disconnection signal notifying the disconnection with the power source 500.

For example, the control part 440 may generate a connection signal including a high signal through an enable circuit or a detection circuit when generating a connection signal, and may generate a connection signal including a low signal through an enable circuit or a detection circuit when generating a non-connected signal.

In addition, the control part 440 may generate a plurality of connection signals notifying connection with the power sources when it is recognized as being connected to a plurality of power sources, and may generate a plurality of disconnection signals notifying disconnection with the power sources when it is recognized as being unconnected to a plurality of power sources.

Here, the control part 440 can select a power source 500 to supply power to at least one of the battery 410 and the driving module 420 based on a plurality of connected signals and a plurality of unconnected signals.

In some cases, when checking the connection state with a plurality of power sources 500, the control part 440 can check the connection state between the a plurality of power sources 500 and the display device 400 when an external input for driving the display device 400 is received.

Here, when checking the connection state with a plurality of power sources 500, when an external input for driving the display device 400 is received, the control part 440 can check a plurality of power sources 500 connectable to the display device 400, and check the connection state between the a plurality of connectable power sources 500 and the display device 400.

For example, when checking a plurality of power sources 500 that can be connected to the display device 400, the control part 440 can check a list of power sources pre-stored in the memory, obtain basic information about each power source 500 from the list of power sources, and check a plurality of power sources 500 that can be connected to the display device 400 based on the basic information about each power source 500.

For example, the basic information for each power source may include at least one of output power information and source identification information for identifying each power source, but is not limited thereto as an embodiment.

In another case, when checking the connection state between a plurality of power sources 500 and the display device 400, the control part 440 may recognize that the specific power source is connected to the display device 400 when power is input from a specific power source among the plurality of power sources 500, and may recognize that the specific power source is not connected to the display device 400 when power is not input from the specific power source.

Here, when checking the connection state between a plurality of power sources 500 and the display device 400, the control part 440 can obtain output power information for a specific power source when power is input from a specific power source among the plurality of power sources 500, check whether the input power corresponds to the specific power source based on the obtained output power information, and if the input power corresponds to the specific power source, recognize that the specific power source is connected to the display device 400.

Next, when selecting a power source 500, the control part 440 may select a first power source for supplying power to the battery 410 and a second power source for supplying power to the driving module 420 based on the power size of the power sources 500 when connected to a plurality of power sources 500.

Here, the first power source can provide greater power than the second power source.

For example, when selecting a power source 500, the control part 440 may, when connected to a plurality of power sources 500, determine the ranking of the a plurality of power sources 500 by power size, and select the power source 500 that provides the greatest power corresponding to the ranking as the first power source for supplying power to the battery 410.

As another example, when selecting a power source 500, the control part 440 may compare the power sizes of the two power sources 500 when connected to the two power sources, select a power source that provides greater power among the two power sources as a first power source for supplying power to the battery 410, and select a power source 500 that provides less power than the first power source as a second power source for supplying power to the driving module 420.

As another example, when selecting a power source 500, the control part 440 may compare the power sizes of the three or more power sources 500 when connected to three or more power sources 500, select a power source that provides the largest power among the three or more power sources 500 as a first power source for supplying power to the battery 410, and select a power source that provides the smallest power as a second power source for supplying power to the driving module 420.

As another example, when selecting a power source 500, the control part 440 may compare the power sizes of the three or more power sources 500 when connected to three or more power sources 500, select a power source 500 that provides the smallest power among the three or more power sources as a second power source for supplying power to the driving module 420, and select the remaining power sources that provide greater power than the second power source as first power sources for supplying power to the battery 410.

Next, when selecting a power source 500, the control part 440 can determine a supply ratio for the amount of power to be supplied to the battery 410 and the amount of power to be supplied to the driving module 420 within the rated power range of the first power source when connected only to the first power source including the main power source among the plurality of power sources 500, and select the first power source for supplying power to the battery 410 and the driving module 420 in accordance with the supply ratio.

Here, the control part 440 may determine the supply ratio so that the supply ratio of the amount of power to be supplied to the battery 410 is greater than the supply ratio of the amount of power to be supplied to the driving module 420 when determining the supply ratio.

For example, when determining the supply ratio, the control part 440 may determine the supply ratio for the amount of power to be supplied to the battery 410 and the amount of power to be supplied to the driving module 420 based on the supply ratio information stored in the memory.

Next, when selecting a power source 500, the control part 440 may select a second power source for supplying power only to the driving module 420 and blocking power supply for battery charging when connected only to a second power source including an external power source among the a plurality of power sources 500.

Here, when selecting a second power source, the control part 440 can generate a battery charging stop control command signal and transmit it to the power supply part 430 to block the power supply for battery charging.

Next, when selecting a power source 500, if all of the plurality of power sources 500 are not connected, the control part 440 may not select a power source 500 and generate a battery mode switching control command signal to transmit the signal to the power supply part 430 to switch to a battery mode that supplies power charged in the battery 410 to the driving module 420.

Here, the control part 440 can check the remaining charge amount of the battery 410 when the power supply part 430 switches to battery mode, and turn off the display device 400 if the remaining charge amount of the battery 410 is less than the preset remaining amount.

In addition, when controlling the power supply path, the control part 440 can control the power supply path of the power supply part 430 to switch to a battery fast charging mode in which power input from the first power source is supplied to the battery 410 when the first power source for supplying power to the battery 410 and the second power source for supplying power to the driving module 420 are selected.

Here, the control part 440 can control the power supply path of the power supply part 430 to check the remaining charge amount of the battery 410 when the power supply part 430 switches to the battery fast charging mode, and to block the power supply for battery charging when the remaining charge amount of the battery 410 is 100%.

Next, the control part 440 can control the power supply path of the power supply part 430 to check whether the display device 400 is off when power input from the second power source is supplied to the driving module 420, and to maintain a battery fast charging mode in which power input from the first power source is supplied to the battery 410 when the display device 400 is off.

Next, the control part 440, when controlling the power supply path, if a first power source for supplying power to the battery 410 and the driving module 420 is selected, can control the power supply path of the power supply part 430 to switch to a battery normal charging mode in which power input from the first power source is supplied to the battery 410 at a preset first supply ratio.

Here, the control part 440 can control the power supply path of the power supply part 430 to maintain the battery normal charging mode in which power input from the first power source is supplied to the battery 410 at a preset first supply ratio when the power supply part 430 is switched to the battery normal charging mode.

In addition, the control part 440 can check whether the display device 400 is off when the power input from the first power source is supplied to the driving module 420 at a preset second supply ratio, and if the display device 400 is off, control the power supply path of the power supply part 430 so that the display device is switched to a battery fast charging mode in which the power input from the first power source is supplied 100% to the battery 410.

Next, the control part 440 can control the power supply path of the power supply part 430 to block the power supply for battery charging when the second power source for supplying power to the driving module 420 is selected when controlling the power supply path.

Here, the control part 440 can check whether the display device 400 is off when power input from the second power source is supplied to the driving module 420, and if the display device 400 is off, control the power supply path of the power supply part so that power input from the second power source is switched to a battery low-speed charging mode in which the power is supplied to the battery 410.

Next, the control part 440 can control the power supply path of the power supply part 430 to switch to a battery mode that supplies power charged in the battery 410 to the driving module 420 when the power source 500 for supplying power to the battery 410 and the driving module 420 is not selected when controlling the power supply path.

Here, the control part 440 can check the remaining charge amount of the battery when the power supply part 430 switches to battery mode, and turn off the display device 400 if the remaining charge amount of the battery 410 is less than the preset remaining amount.

In this way, the present disclosure can efficiently control power supply for device operation and battery charging by controlling a power supply path so that power input from a power source is supplied to at least one of a battery and a driving module based on a connection state with a plurality of power sources.

In addition, the present disclosure can implement various operation scenarios of a display device, such as a TV, by configuring a plurality of power supply paths, including a power supply path for driving a display device and a power supply path for charging a battery, by utilizing a power source connection state logic circuit when powered from a plurality of power sources.

In addition, the present disclosure can control a plurality of power supply paths so that a plurality of powers do not collide and are efficiently supplied when power is supplied simultaneously from a plurality of power sources through a power source connection state logic circuit.

In addition, the present disclosure can shorten the charging time of the battery, extend the life of the battery cell, and improve reliability by charging the battery with an adapter, which is a main power source, and driving the TV operation with a USB PD, which is an external power source.

In addition, the present disclosure can reduce TV power consumption by blocking the power supply path to the battery when the battery is fully charged.

Fig. 6 is a block diagram for explaining the operation of a display device according to one embodiment of the present disclosure.

As illustrated in Fig. 6, the control part 440 of the present disclosure can recognize a connection state as being connected to both the first power source 510 and the second power source 520 when power is input from the first power source 510 and the second power source 520 among a plurality of power sources.

In some cases, the control part 440 of the present disclosure may recognize a connection state as being connected only to the first power source 510 when power is input from a first power source 510 among a plurality of power sources and power is not input from the second power source 520.

In another case, the control part 440 of the present disclosure can recognize a connection state as being connected only to the second power source 520 when power is not input from the first power source 510 among the a plurality of power sources and power is input from the second power source 520.

In another case, the control part 440 of the present disclosure can recognize a connection state as being unconnected to both the first power source 510 and the second power source 520 when power is not input from each of the first power source 510 and the second power source 520 among the plurality of power sources.

Next, the control part 440 of the present disclosure can generate a connection signal for notifying a connection with at least one of the first power source 510 and the second power source 520 through the power source connection state logic circuit 445, generate a disconnection signal for notifying a disconnection with at least one of the first power source 510 and the second power source 520, and check the connection state with the power sources based on the connection signal and the disconnection signal.

Next, the control part 440 of the present disclosure can select a power source to supply power to at least one of the battery 410 and the driving module 420 based on the connection state with the first power source 510 and the second power source 520.

Here, the control part 440 of the present disclosure compares the power size of the first power source 510 and the power size of the second power source 520 when both the first power source 510 and the second power source 520 are connected, and if the power size of the first power source 510 is greater than the power size of the second power source 520, the first power source 510 is selected as the power source for supplying power to the battery 410, and the second power source 520, which provides less power than the first power source 510, can be selected as the power source for supplying power to the driving module 420.

In some cases, the control part 440 of the present disclosure may determine a supply ratio for the amount of power to be supplied to the battery 410 and the amount of power to be supplied to the driving module 420 within the rated power range of the first power source 510 when only the first power source 510 is connected, and select the first power source 510 to supply power to the battery 410 and the driving module 420 in accordance with the supply ratio.

Here, the control part 440 of the present disclosure, when determining the supply ratio, can determine the supply ratio so that the supply ratio of the amount of power to be supplied to the battery 410 is greater than the supply ratio of the amount of power to be supplied to the driving module 420.

In another case, when only the second power source 520 is connected, the power supply for battery charging can be blocked and the second power source 520 can be selected to supply power only to the driving module 420.

Here, the control part 440 of the present disclosure can generate a battery charging stop control command signal and transmit it to the power supply part 430 to block the power supply for battery charging when selecting the second power source 520.

In another case, the control part 440 of the present disclosure may generate a battery mode switching control command signal and transmit it to the power supply part 430 to switch to a battery mode that supplies power charged in the battery 410 to the driving module 420 when both the first power source 510 and the second power source 520 are not connected.

Here, the control part 440 of the present disclosure can check the remaining charge amount of the battery 410 when the power supply part 430 switches to battery mode, and turn off the display device 400 if the remaining charge amount of the battery 410 is less than a preset remaining amount.

In addition, the control part 440 of the present disclosure can generate a control signal to control a power supply path so that power input from a selected power source is supplied to at least one of the battery 410 and the driving module 420, and transmit the control signal to the power supply part 430.

For example, the control part 440 of the present disclosure may control the power supply path of the power supply part 430 to switch to a battery fast charging mode in which power input from the first power source 510 is supplied to the battery 410 when a first power source 510 for supplying power to the battery 410 and a second power source 520 for supplying power to the driving module 420 are selected.

Here, the control part 440 of the present disclosure can control the power supply path of the power supply part 430 to check the remaining charge amount of the battery 410 when the power supply part 430 switches to the battery fast charging mode, and to block the power supply for battery charging when the remaining charge amount of the battery 410 is 100%.

In addition, the control part 440 of the present disclosure can control the power supply path of the power supply part 430 to check whether the display device is off when power input from the second power source 520 is supplied to the driving module 420, and to maintain a battery fast charging mode in which power input from the first power source 510 is supplied to the battery 410 when the display device is off.

As another example, the control part 440 of the present disclosure may control the power supply path of the power supply part 430 to switch to a battery normal charging mode in which power input from the first power source 510 is supplied to the battery 410 at a preset first supply ratio when only the first power source 510 for supplying power to the battery 410 and the driving module 420 is selected.

Here, the control part 440 of the present disclosure can control the power supply path of the power supply part 430 to maintain the battery normal charging mode in which power input from the first power source 510 is supplied to the battery 410 at a preset first supply ratio when the power supply part 430 is switched to the battery normal charging mode.

In addition, the control part 440 of the present disclosure can control the power supply path of the power supply part 430 to check whether the display device is off when the power input from the first power source 510 is supplied to the driving module 420 at a preset second supply ratio, and if the display device is off, to switch to a battery fast charging mode in which the power input from the first power source 510 is supplied 100% to the battery 410.

As another example, the control part 440 of the present disclosure can control the power supply path of the power supply part 430 to block the power supply for battery charging when only the second power source 520 for supplying power to the driving module 420 is selected.

Here, the control part 440 of the present disclosure can control the power supply path of the power supply part 430 to check whether the display device is off when power input from the second power source 520 is supplied to the driving module 420, and, if the display device is off, to switch to a battery low-speed charging mode in which power input from the second power source 520 is supplied to the battery 410.

As another example, the control part 440 of the present disclosure can control the power supply path of the power supply part 430 to switch to a battery mode that supplies power charged in the battery 410 to the driving module 420 when neither the first power source 510 nor the second power source 520 for supplying power to the battery 410 and the driving module 420 are selected.

Here, the control part 440 of the present disclosure can check the remaining charge amount of the battery when the power supply part 430 switches to battery mode, and turn off the display device if the remaining charge amount of the battery 410 is less than a preset remaining amount.

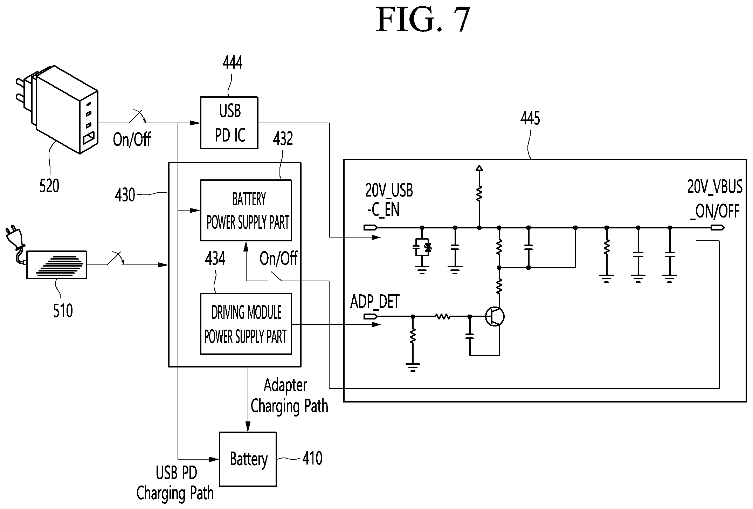

Fig. 7 is a view for explaining a power source connection state logic circuit of a display device according to one embodiment of the present disclosure.

As illustrated in Fig. 7, the present disclosure can check whether power is supplied through a power source connection state logic circuit 445 when connected to a first power source 510 including a main power source and at least one second power source 520 including an external power source, and can check the connection state with the power sources based on whether power is supplied.

For example, the first power source 510 may include an adapter power source, and the second power source 520, which is an external power source, may include a USB PD (Universal Serial Bus Power Delivery) power source, but this is only an example and is not limited thereto.

In addition, the power supply part 430 may include a battery power supply part 432 that provides a power supply path for supplying power input from a power source selected in response to a control signal of the control part to the battery 410, and a driving module power supply part 434 that provides a power supply path for supplying power input from a power source selected in response to a control signal of the control part to the driving module 420.

Next, the power source connection state logic circuit 445 can receive a high signal through the enable circuit 444 when power is supplied from the second power source 520, and can receive a high signal through the detection circuit 444 of the power supply part 430 when power is supplied from the first power source 510.

In some cases, the power source connection state logic circuit 445 may receive a low signal through the enable circuit 444 when power is not supplied from the second power source 520, and may receive a low signal through the detection circuit 444 of the power supply part 430 when power is not supplied from the first power source 510.

Accordingly, the control part can recognize, through the power source connection state logic circuit 445, that it is connected to the corresponding power source when power is input from the power source, and can recognize that it is not connected to the corresponding power source 500 when power is not input from the power source.

Next, the power source connection state logic circuit 445 can output a state signal of any one of a first connection state in which both the first power source 510 and the second power source 520 are connected, a second connection state in which only the first power source 510 is connected, a third connection state in which only the second power source 520 is connected, and a fourth connection state in which both the first power source 510 and the second power source 520 are not connected, based on a first input signal according to whether power is supplied from the first power source 510 and a second input signal according to whether power is supplied from the second power source 520.

In addition, the control part can generate a battery charging stop control command signal to cut off the power supply for battery charging in a third connection state in which only the second power source 520 is connected, through the power source connection state logic circuit 445, and transmit it to the power supply part 430.

In addition, the control part may generate a battery mode switching control command signal to be transmitted to the power supply part 430 to switch to a battery mode in which power charged in the battery 410 is supplied to the driving module 420 in a fourth connection state in which both the first power source 510 and the second power source 520 are not connected, through the power source connection state logic circuit 445.

In addition, the control part, through the power source connection state logic circuit 445, can determine a supply ratio for the amount of power to be supplied to the battery 410 and the amount of power to be supplied to the driving module 420 within the rated power range of the first power source 510 in the second connection state in which only the first power source 510 is connected, and control the power supply path of the power supply part 430 to supply power to the battery 410 and the driving module 420 in accordance with the supply ratio.

In addition, the control part, through the power source connection state logic circuit 445, can compare the power sizes of the first power source 510 and the second power source 520 in the first connection state in which both the first power source 510 and the second power source 520 are connected, and controls the power supply path of the power supply part 430 so that the power source providing greater power among the first power source 510 and the second power source 520 supplies power to the battery 410 and the power source providing less power among the first power source 510 and the second power source 520 supplies power to the driving module 420.

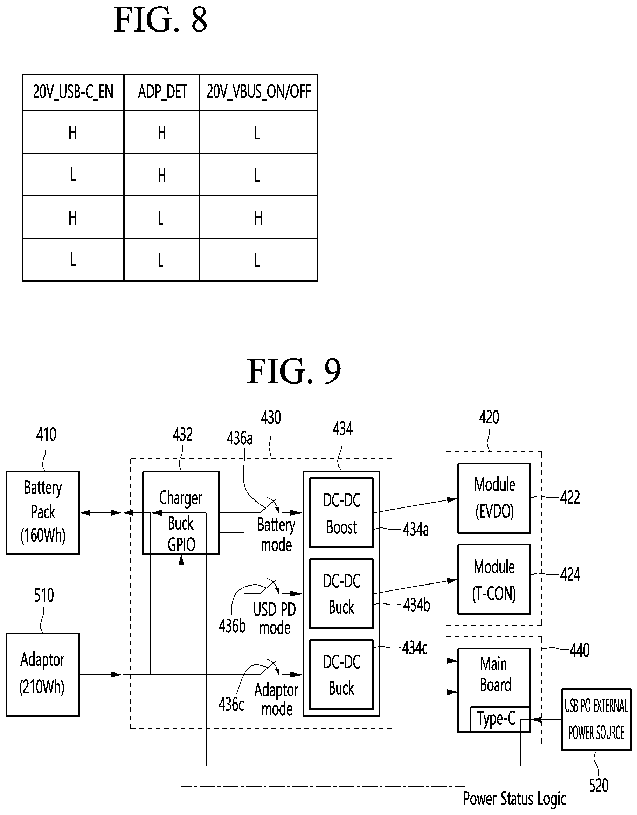

Fig. 8 is a view for explaining a logic table corresponding to a power source connection state logic circuit of a display device according to one embodiment of the present disclosure.

As illustrated in Fig. 8, the power source connection state logic circuit can generate a logic table for the power source connection state based on a first input signal according to whether power is supplied from a first power source 510 and a second input signal according to whether power is supplied from a second power source 520.

For example, the power source connection state logic circuit can output a low signal to the power supply part when it receives a high signal supplied with power from the second power source 520 and a high signal supplied with power from the first power source 510.

Here, the battery power supply part of the power supply part can maintain the power supply of the first power source (ADP) for battery charging through switching control according to a low signal.

In addition, the power source connection state logic circuit can output a low signal to the power supply part when it receives a low signal supplied with power from the second power source 520 and a high signal supplied with power from the first power source 510.

Here, the battery power supply part of the power supply part can maintain the power supply of the first power source (ADP) for battery charging through switching control according to a low signal.

Additionally, the power source connection state logic circuit can output a high signal to the power supply part when it receives a high signal supplied with power from the second power source 520 and a low signal supplied with power from the first power source 510.

Here, the battery power supply part of the power supply part can block the power supply of the second power source (USB-C) for battery charging through switching control according to a high signal.

Additionally, the power source connection state logic circuit can output a low signal to the power supply part when it receives a low signal supplied with power from the second power source 520 and a low signal supplied with power from the first power source 510.

Here, the battery power supply part of the power supply part can control the power supply path to switch to the battery mode without power supply from the first power source (ADP) for battery charging through switching control according to a low signal.

Fig. 9 is a view for explaining a process of controlling a power supply path of a display device according to one embodiment of the present disclosure.

As illustrated in Fig. 9, the present disclosure may include a battery 410, a driving module 420 for driving a display device 400, a power supply part 430 for supplying power input from a plurality of power sources 500 to at least one of the battery 410 and the driving module 420, and a control part 440 for controlling a power supply path of the power supply part 430.

Here, the plurality of power sources may include a first power source 510 including an adapter power source, which is a main power source, and at least one second power source 520 including a USB PD (Universal Serial Bus Power Delivery) power source, which is an external power source.

In addition, the power supply part 430 may include a battery power supply part 432 that provides a power supply path for supplying power input from a power source to a battery 410 in response to a control signal of the control part 440, and a driving module power supply part 434 that provides a power supply path for supplying power input from a power source to a driving module 420 in response to a control signal of the control part 440.

For example, the battery power supply part 432 may include a battery charging buck converter, which is a battery power supply part 432 that switches power supplied to the battery 410 according to a control signal of the control part 440, and the driving module power supply part 434 may include a boost converter 434a that provides power of the battery 410 input through the charging buck converter to the first driving module 422, a first buck converter 434b that provides power of the second power source 520 input through the charging buck converter to the second driving module 424, and a second buck converter 434c that provides power input from the first power source 510 to the third driving module of the control part 440, but this is only an example and is not limited thereto.

In addition, the power supply part 430 may include a first switch 436a that switches the connection between the charging buck converter, which is the battery power supply part 432, and the boost converter 434a, a second switch 436b that switches the connection between the charging buck converter, which is the battery power supply part 432, and the first buck converter 434b, and a third switch 436c that switches the connection between the first power source 510 and the second buck converter 434c, but this is only an example and is not limited thereto.

Here, the power supply part 430 can control the first switch 436a to connect the charging buck converter and the boost converter 434a, which are the battery power supply part 432, if the power supply mode is a battery mode that provides power of the battery 410 to the first driving module 422, the second switch 436b to connect the charging buck converter and the first buck converter 434b, which are the battery power supply part 432, if the power supply mode is an external power mode that provides power of the second power source 520 to the second driving module 424, and the third switch 436c to connect the first power source and the second buck converter 434c, if the power supply mode is a main power mode that provides power of the first power source 510 to the third driving module of the control part 440.

For example, the first driving module 422 may include a driving module including a high-level power supply (EVDD), the second driving module 424 may include a driving module including a timing controller (TCON), and the third driving module of the control part 440 may be a driving module including a main board circuit, but this is only an example and is not limited thereto.

Next, the control part 440 can select a power source to supply power to at least one of the battery 410 and the driving module 420 based on the connection state with the first power source 510 and the second power sources 520.

In addition, the control part 440 can control the power supply path of the power supply part 430 so that power input from the selected power source is supplied to at least one of the battery 410 and the driving module 420.

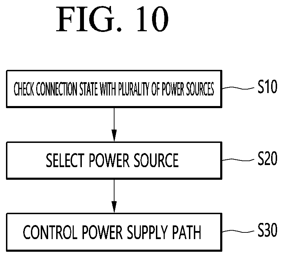

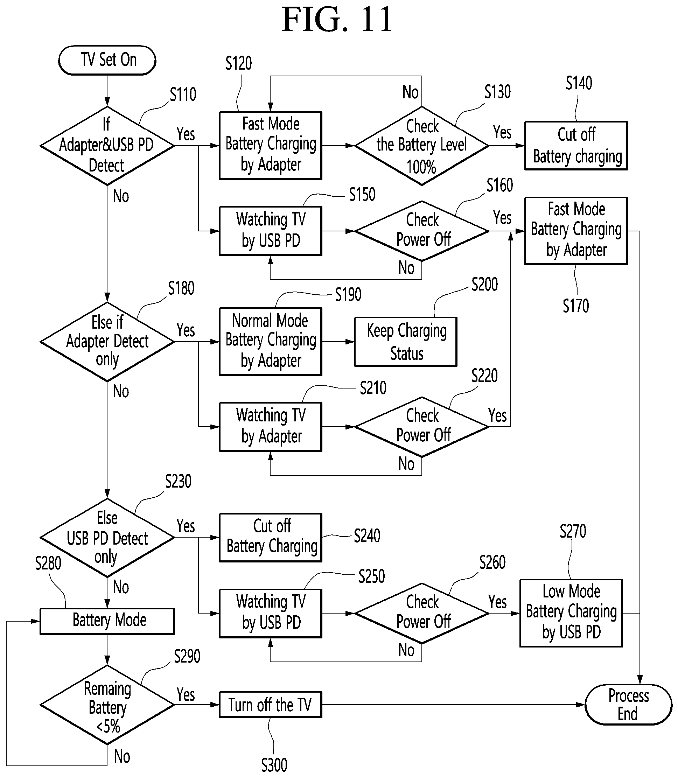

Fig. 10 and Fig. 11 are flowcharts for explaining a method for controlling power supply of a display device according to an embodiment of the present disclosure.

As illustrated in Fig. 10, the present disclosure can check the connection state with a plurality of power sources (S10).

Here, in the present disclosure, a plurality of power sources connectable to the display device can be checked when an external input for driving the display device is received, and a connection state between the plurality of connectable power sources and the display device can be checked.

As an example, in the present disclosure, a list of power sources pre-stored in a memory can be checked, basic information about each power source from the list of power sources can be obtained, and a plurality of power sources connectable to a display device based on the basic information about each power source can be checked.

For example, the basic information for each power source may include at least one of output power information and source identification information for identifying each power source, but is not limited thereto as an embodiment.

In the present disclosure, it can be recognized that a specific power source is connected to a display device when power is input from a specific power source among a plurality of power sources, and can be recognized that the specific power source is not connected to the display device when power is not input from the specific power source.

Here, in the present disclosure, output power information for a specific power source can be obtained when power is input from a specific power source among a plurality of power sources, whether the input power corresponds to the specific power source based on the obtained output power information can be checked, and it can be recognized that the specific power source is connected to the display device if the input power corresponds to the specific power source.

In addition, in the present disclosure, a power source to supply power to at least one of a battery and a driving module based on a connection state with a plurality of power sources can be selected (S20).

Here, in the present disclosure, a first power source for supplying power to a battery and a second power source for supplying power to a driving module can be selected, respectively, based on the power size of the power sources when connected to a plurality of power sources.

Here, the first power source can provide greater power than the second power source.

For example, in the present disclosure, when connected to a plurality of power sources, the plurality of power sources by power size can be ranked, and a power source that provides the greatest power corresponding to the rank can be selected as a first power source for supplying power to a battery.

As another example, in the present disclosure, the power sizes of the two power sources can be compared when connected to two power sources, a power source that provides a larger power among the two power sources can be selected as a first power source for supplying power to the battery, and a power source that provides a smaller power than the first power source can be selected as a second power source for supplying power to the driving module.

As another example, in the present disclosure, the power sizes of the three or more power sources can be compared when connected to three or more power sources, a power source providing the largest power among the three or more power sources can be selected as a first power source for supplying power to the battery, and a power source providing the smallest power can be selected as a second power source for supplying power to the driving module.

As another example, in the present disclosure, the power sizes of the three or more power sources can be compared when connected to three or more power sources, a power source providing the smallest power among the three or more power sources can be selected as a second power source for supplying power to the driving module, and the remaining power sources providing greater power than the second power source can be selected as first power sources for supplying power to the battery.

In addition, in the present disclosure, a supply ratio for the amount of power to be supplied to the battery and the amount of power to be supplied to the driving module within a rated power range of the first power source can be determined when connected only to a first power source including a main power source among a plurality of power sources, and a first power source for supplying power to the battery and the driving module corresponding to the supply ratio can be selected.

Here, in the present disclosure, the supply ratio can be determined so that the supply ratio of the amount of power to be supplied to the battery is greater than the supply ratio of the amount of power to be supplied to the driving module.

In addition, in the present disclosure, power supply for battery charging can be blocked and a second power source to supply power only to the driving module can be selected when connected only to a second power source including an external power source among a plurality of power sources.

In addition, in the present disclosure, the power supply path can be controlled so as to switch to a battery mode in which power charged in a battery is supplied to a driving module without selecting a power source when all of the plurality of power sources are disconnected.

Next, in the present disclosure, a power supply path can be controlled so that power input from a selected power source is supplied to at least one of a battery and a driving module (S30).

FIG. 11 is a flowchart for explaining a method for controlling power supply of a TV set to which a first power source including an adapter power source, which is a main power source, and a second power source including a USB PD (Universal Serial Bus Power Delivery) power source, which is an external power source, are connected.

As illustrated in Fig. 11, in the present disclosure, whether both the adapter and the USB PD are connected can be verified (S110).

Next, the present disclosure can switch to a battery fast charging mode by controlling a power supply path so that power input from the adapter is supplied to the battery when both the adapter and USB PD are connected (S120).

Here, in the present disclosure, the power supply path can be checked to check the remaining charge amount of the battery when switching to the battery fast charging mode (S130) and the power supply for battery charging can be blocked if the remaining charge amount of the battery is 100% (S140).

Next, in the present disclosure, a power supply path can be controlled so that power input from a USB PD is supplied to a driving module (S150), whether a display device is off can be checked when power input from a USB PD is supplied to the driving module (S160), and a battery fast charging mode in which power input from an adapter is supplied to a battery may be maintained when the display device is off (S170).

Next, in the present disclosure, whether both the adapter and USB PD are not connected, and only the adapter is connected can be checked (S180).

In addition, the present disclosure can switch to a battery normal charging mode by controlling a power supply path so that power input from an adapter is supplied to a battery at a preset first supply ratio when only the adapter is connected (S190).

Here, in the present disclosure, a battery normal charging mode in which power input from an adapter is supplied to the battery at a preset first supply ratio when switching to a battery normal charging mode can be maintained (S200).

Next, in the present disclosure, can control a power supply path so that power input from an adapter is supplied to a driving module at a preset second supply ratio (S210), check whether the display device is off (S220), and if the display device is off, switch to a battery fast charging mode in which power input from the adapter is supplied to the battery at a 100% ratio (S170).

Next, in the present disclosure, whether only the adapter is connected and only the USB PD is connected can be checked (S230).

In addition, in the present disclosure, the power supply path to block power supply for battery charging can be controlled when only USB PD is connected (S240).

Next, in the present disclosure, a power supply path can be controlled to supply power input from a USB PD to a driving module (S250), whether a display device is off (S260) can be checked, and if the display device is off, the power supply path can be controlled to supply power input from the USB PD to a battery, thereby switching to a battery low-speed charging mode (S270).

Next, the present disclosure can switch to battery mode by controlling the power supply path to supply power charged in the battery to the driving module when neither the adapter nor the USB PD is connected (S280).

Here, in the present disclosure, the remaining charge amount of the battery can be checked when switching to battery mode (S290), and the display device can be turned off if the remaining charge amount of the battery is less than a preset remaining amount (S300).

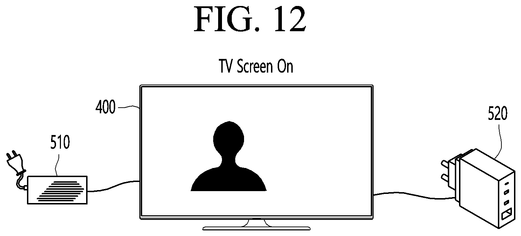

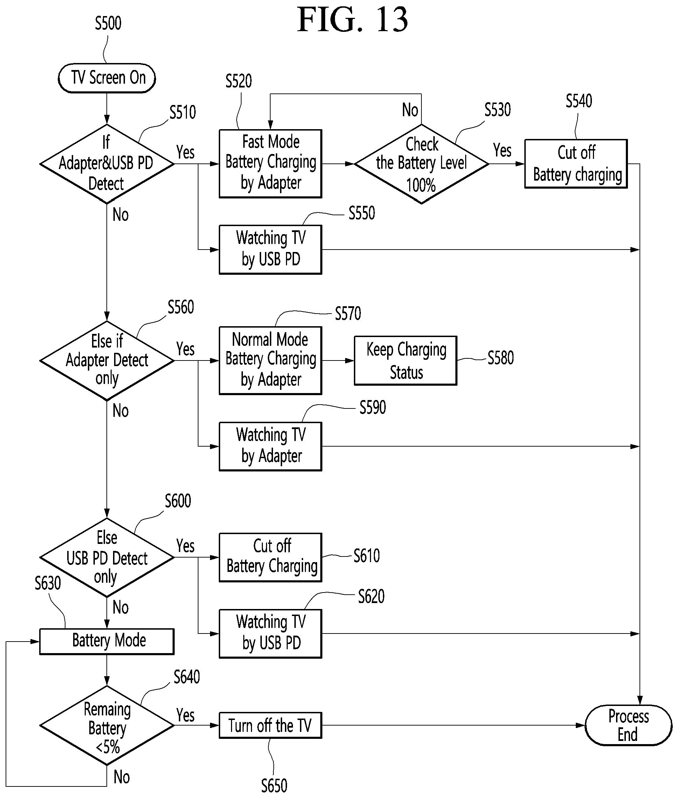

Fig. 12 and Fig. 13 are views for explaining a power supply control process of a screen-on state of a display device according to one embodiment of the present disclosure.

As illustrated in Fig. 12, in the present disclosure, power supply to a battery and a driving module can be efficiently controlled by considering the connection state of a first power source 510 including an adapter power source and a second power source 520 including a USB PD power source when the screen of the display device 400 is on.

As illustrated in Fig. 13, in the present disclosure, whether both the adapter and USB PD are connected (S510) can be checked when the TV screen is on (S500).

Next, in the present disclosure can switch to a battery fast charging mode by controlling a power supply path so that power input from the adapter is supplied to the battery when both the adapter and USB PD are connected (S520).

Here, in the present disclosure, the power supply path can be controlled to check the remaining charge amount of the battery when switching to the battery fast charging mode (S530) and the power supply for battery charging can be blocked if the remaining charge amount of the battery is 100% (S540).

Next, in the present disclosure, a power supply path can be controlled so that power input from a USB PD is supplied to a driving module (S550).

Next, in the present disclosure, whether both the adapter and USB PD are not connected, and only the adapter is connected can be checked (S560).

In addition, the present disclosure can switch to a battery normal charging mode by controlling a power supply path so that power input from an adapter is supplied to a battery at a preset first supply ratio when only the adapter is connected (S570).

Here, in the present disclosure, a battery normal charging mode in which power input from the adapter is supplied to the battery at a preset first supply ratio can be maintained when switching to the battery normal charging mode (S580).

Next, in the present disclosure, the power supply path can be controlled so that power input from the adapter is supplied to the driving module at a preset second supply ratio (S590).

Next, in the present disclosure, whether only the adapter is connected and only the USB PD is connected can be checked (S600).

In addition, in the present disclosure, the power supply path can be controlled to block power supply for battery charging when only USB PD is connected (S610).

Next, in the present disclosure, a power supply path can be controlled to supply power input from a USB PD to a driving module (S620).

Next, the present disclosure can switch to battery mode by controlling the power supply path to supply power charged in the battery to the driving module when neither the adapter nor the USB PD is connected (S630).

Here, in the present disclosure, the remaining charge amount of the battery can be checked when switching to battery mode (S640), and the TV can be turned off if the remaining charge amount of the battery is less than a preset remaining amount (S650).

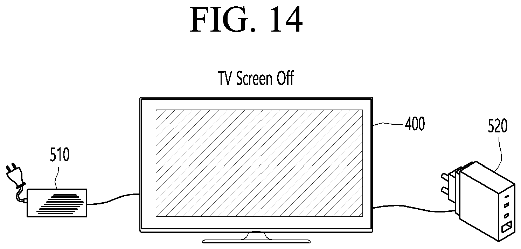

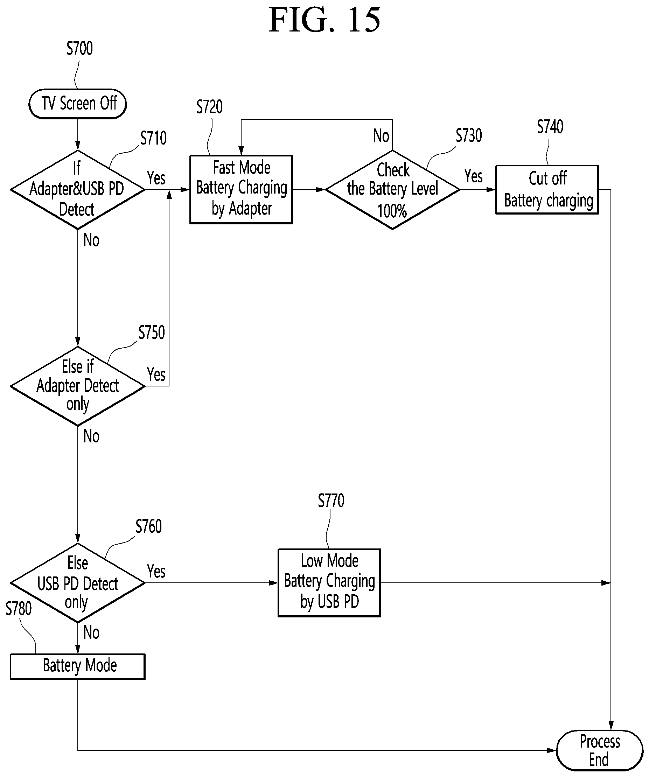

Fig. 14 and Fig. 15 are views for explaining a power supply control process in a screen-off state of a display device according to one embodiment of the present disclosure.

As illustrated in Fig. 14, in the present disclosure, power supply can be efficiently controlled by considering the connection state of a first power source 510 including an adapter power source and a second power source 520 including a USB PD power source when the screen of the display device 400 is in an off state.

As illustrated in Fig. 15, in the present disclosure, whether both the adapter and USB PD are connected (S710) can be checked when the TV screen is off (S700).

Next, the present disclosure can switch to a battery fast charging mode by controlling a power supply path so that power input from the adapter is supplied to the battery when both the adapter and USB PD are connected (S720).

Here, in the present disclosure, the power supply path can be controlled to check the remaining charge amount of the battery when switching to the battery fast charging mode (S730) and the power supply for battery charging can be blocked if the remaining charge amount of the battery is 100% (S740).

Next, in the present disclosure, whether both the adapter and USB PD are not connected, and only the adapter is connected can be checked (S750).

In addition, the present disclosure can switch to a battery fast charging mode by controlling the power supply path so that power input from the adapter is supplied to the battery when only the adapter is connected (S720).

Next, in the present disclosure, whether only the adapter is connected and only the USB PD is connected can be checked (S760).

In addition, the present disclosure can switch to a battery low-speed charging mode by controlling the power supply path so that power input from a USB PD is supplied to the battery when only a USB PD is connected (S770).

Next, the present disclosure can switch to battery mode by controlling the power supply path to supply power charged in the battery to the driving module when neither the adapter nor the USB PD is connected (S780).

In this way, in the present disclosure, power supply for device operation and battery charging can be efficiently controlled by controlling a power supply path so that power input from a power source is supplied to at least one of a battery and a driving module based on a connection state with a plurality of power sources.

In addition, in the present disclosure, various operation scenarios of a display device, such as a TV, can be implemented by configuring a plurality of power supply paths, including a power supply path for driving a display device and a power supply path for charging a battery, by utilizing a power source connection state logic circuit when powered from a plurality of power sources.

In addition, in the present disclosure, a plurality of power supply paths can be controlled so that a plurality of powers do not collide and are efficiently supplied when power is supplied simultaneously from a plurality of power sources through a power source connection state logic circuit.

In addition, in the present disclosure, the charging time of the battery can be shortened, the life of the battery cell can extend, and reliability can be improved by charging the battery with an adapter, which is a main power source, and driving the TV operation with a USB PD, which is an external power source.

In addition, in the present disclosure, TV power consumption can be reduced by blocking the power supply path to the battery when the battery is fully charged.

The above-described present disclosure can be implemented as a computer-readable code on a medium in which a program is recorded. The computer-readable medium includes all kinds of recording devices in which data that can be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may include a processor 180 of an artificial intelligence device.

### [Industrial Applicability]

According to the display device according to the present disclosure, power supply for device operation and battery charging can be efficiently controlled by controlling a power supply path so that power input from a power source is supplied to at least one of a battery and a driving module based on a connection state with a plurality of power sources, so that the display device has remarkable industrial applicability.

## Claims

1. A display device comprising:
a battery;
a driving module driving a display device;
a power supply part supplying power input from a plurality of power sources to at least one of the battery and the driving module; and,
a control part controlling a power supply path of the power supply part,
wherein the control part checks a connection state with the plurality of power sources, selects a power source for supplying power to at least one of the battery and the driving module based on the connection state with the plurality of power sources, and controls the power supply path so that power input from the selected power source is supplied to at least one of the battery and the driving module.

2. The display device of claim 1,
the control part,
when checking the connection state with the plurality of power sources, recognizes that it is connected to the corresponding power source when power is input from the power source, and
recognizes that it is not connected to the corresponding power source when power is not input from the power source.

3. The display device of claim 1,
wherein the control part,
when selecting the power source, selects a first power source for supplying power to the battery and a second power source for supplying power to the driving module based on the power size of the power source when connected to the plurality of power sources.

4. The display device of claim 1,
wherein the control part,
when selecting the power source, determines the supply ratio for the amount of power to be supplied to the battery and the amount of power to be supplied to the driving module within the rated power range of the first power source when connected only to the first power source including the main power source among the plurality of power sources, and selects the first power source for supplying power to the battery and the driving module in accordance with the supply ratio.

5. The display device of claim 4,
wherein the control part determines the supply ratio so that the supply ratio of the amount of power to be supplied to the battery is greater than the supply ratio of the amount of power to be supplied to the driving module.

6. The display device of claim 1,
wherein the control part,
when selecting the power source, blocks the power supply for charging the battery and selects the second power source for supplying power only to the driving module when connected only to the second power source including an external power source among the plurality of power sources.

7. The display device of claim 1,
wherein the control part,
when controlling the power supply path, controls the power supply path of the power supply part so that when a first power source for supplying power to the battery and a second power source for supplying power to the driving module are selected, the power input from the first power source is switched to a battery fast charging mode in which the power is supplied to the battery.

8. The display device of claim 7,
wherein the control part, when the power supply part switches to the battery fast charging mode, the control part checks the remaining charge amount of the battery, and controls the power supply path of the power supply part to block the power supply for charging the battery if the remaining charge amount of the battery is 100%.

9. The display device of claim 1,
wherein the control part,
when controlling the power supply path, controls the power supply path of the power supply part so that when a first power source for supplying power to the battery and the driving module is selected, the power input from the first power source is switched to a battery normal charging mode in which the power is supplied to the battery at a preset first supply ratio.

10. The display device of claim 9,
wherein the control part,
when the power input from the first power source is supplied to the driving module at a preset second supply ratio, checks whether the display device is off, and when the display device is off, controls the power supply path of the power supply part so that the power input from the first power source is switched to a battery fast charging mode in which 100% of the power is supplied to the battery.

11. The display device of claim 1,
wherein the control part,
when controlling the power supply path, controls the power supply path of the power supply part to block the power supply for charging the battery when a second power source for supplying power to the driving module is selected.

12. The display device of claim 11,
Wherein, when power input from the second power source is supplied to the driving module, the control part checks whether the display device is off, and if the display device is off, controls the power supply path of the power supply part so that power input from the second power source is switched to a battery low-speed charging mode supplied to the battery.

13. The display device of claim 1,
wherein the control part,
when controlling the power supply path, controls the power supply path of the power supply part to switch to a battery mode that supplies power charged in the battery to the driving module when a power source for supplying power to the battery and the driving module is not selected.

14. The display device of claim 13,
wherein the control part,
when the power supply part switches to battery mode, checks the remaining charge of the battery, and if the remaining charge of the battery is less than the preset remaining amount, turns off the display device.

15. A method for controlling power supply of a display device including a battery and a driving module comprising:
checking a connection state with a plurality of power sources,
selecting a power source for supplying power to at least one of the battery and the driving module based on the connection state with the plurality of power sources; and
controlling the power supply path so that power input from the selected power source is supplied to at least one of the battery and the driving module.
